# EUROPEAN PATENT SPECIFICATION

(11) **EP 3 008 991 B1**
(45) Date of publication and mention of the grant of the patent: **31.01.2018**
(21) Application number: 14306641.3
(22) Date of filing: 16.10.2014
(51) Int. Cl.: A01D 89/00, A01D 25/00, A01D 25/04, A01D 33/10, A01D 51/00, B65G 33/10

(54) **PICK-UP APPARATUS FOR HARVESTED CROPS AND CORRESPONDING USE**
AUFNAHMEVORRICHTUNG FÜR ERNTEGUT UND ZUGEHÖRIGE VERWENDUNG
APPAREIL DE RAMASSAGE DE RÉCOLTE ET UTILISATION CORRESPONDANTE

(43) Date of publication of application: 20.04.2016
(73) Proprietor: Exel Industries, 51200 Epernay (FR)
(72) Inventor: POLSTER, Sebastian, 84069 Schierling (DE); ENGL, Stephan, 93346 Ihrlerstein (DE)
(74) Representative: Lavoix

(56) References cited:
- EP-A1- 2 172 093
- DE-U1- 29 504 551
- US-A- 2 406 976
- US-A- 2 645 072

## Description

The present invention concerns a pick-up apparatus according to the preamble of claim 1 and the use of such a pick-up apparatus according to claim 12.

Such an apparatus is known from US 2406976.

In the prior art, pick-up apparatuses of this kind, which are used for picking up sugar beets, are known for example from EP 2 172 093. These pick-up apparatuses are mounted on transfer loaders such as the "Terra Felis 2" manufactured by HOLMER.

The pick-up apparatuses known in the prior art have a maximum pick-up width, which is around 10 m. This means that the maximum width of the crop heap should not exceed this width. Crop heaps having a larger width are loaded using wheel loaders.

The invention seeks to overcome the drawbacks of the prior art and to create a pick-up apparatus that allows picking-up harvested crop arranged in a crop heap having a width larger than the maximum pick-up width. Other objectives of the invention are picking-up the crop while causing little damage to the crop and in an energy efficient manner.

To this end the invention proposes a pick-up apparatus according to claim 1.

The pick-up apparatus can have one or more of the following features:

The pick-up apparatus (2) comprises a pick-up section (8) defining a pick-up direction PD, a pick-up plane PL, and a first lateral outward direction LOD1,
the pick-up section having a pick-up member (24) and a pick-up frame (20),
the pick-up frame (20) having a first lateral side (36), a second lateral side (38) and forming a pick-up opening (42),
the pick-up member (24) defining a pick-up width PW for the harvested crops,
characterized in that the pick-up apparatus comprises
- a heap divider (10) adapted for dividing the crop heap, in that
- the heap divider comprises a dividing member (50) adapted for guiding harvested crop on the crop heap (4) towards the pick-up opening, in that
- the dividing member (50) has an upper end (52), a lower end (54) and a longitudinal axis X-X, and in that
- in an active position of the dividing member, the dividing member (50) is inclined with respect to the pick-up plane PL, the upper end (52) is located with respect to the lower end (54) forward taken in the pick-up direction PD and the upper end 52 is located laterally outwards of the first lateral side (36) taken in the first lateral outward direction LOD1.
   - The dividing member is a dividing roller (50) rotatably mounted with respect to the pick-up section (8) around an axis of rotation.
   - The dividing roller has a threaded heap dividing portion (58) comprising at least one heap dividing protrusion (62), and preferably wherein the dividing roller has an intake portion (60) having wear protection members (63) extending parallel to the axis of rotation.
   - The longitudinal axis X-X is inclined with respect to the pick-up plane PL and with respect to the pick-up direction PD at a first angle of inclination (α) comprised between 30° and 60° and/or the longitudinal axis X-X is inclined with respect to the pick-up plane PL and perpendicular to the pick-up direction PD at a second angle of inclination (β) comprised between 30° and 60°.
   - The longitudinal axis X-X is inclined with respect to the pick-up plane PL, notably projected onto a plane perpendicular to the pick-up direction PD, at a third angle of inclination (γ), which is comprised between 25° and 65°, preferably between 35° and 55°.
   - The heap divider comprises link means (66) linking the dividing member to the pick-up frame and wherein the link means (66) are adapted to modify the position of the dividing member with respect to the pick-up frame.
   - The dividing member (50) has an inactive position in which the upper end (52) is located with respect to the lower end (54) laterally inwards with respect to the first lateral side, in particular the link means being adapted to move the dividing member between the active and inactive position.
   - The pick-up apparatus comprises a loading screw (80) adapted for loading crops into the pick-up opening (42), and wherein the loading screw is arranged along the first lateral side (36) of the pick-up frame.
   - The loading screw is inclined with respect to the pick-up plane PL and has a front end (84) and a rear end (86), taken in the pick-up direction PD, the front end being nearer to the pick-up plane PL than the rear end.

The first lateral side (36) comprises a first lateral external face (44),
the pick-up section comprises first transfer rollers (30) arranged on the first lateral side of the pick-up frame and first transfer roller driving means (46), and
the first transfer roller driving means (46) are arranged, with respect to the first lateral external face, completely on the same side as the first transfer rollers.
- The pick-up section comprises second transfer rollers (32) arranged on the second lateral side and/or a cleaning roller (26) adapted to clean the pick-up member (24), at least one distribution roller (28),
second transfer roller driving means (48) adapted for driving the second transfer rollers and/or the cleaning roller and/or the at least one distribution roller, wherein the second transfer roller driving means (48) are arranged on the second lateral side (38).

The invention refers also to the use of a pick-up apparatus disclosed above for picking-up crop from a crop heap having a heap width HW, comprising the following successive steps:
- bringing the dividing member into contact with the crop heap (4) so that crop arranged outside the projection of the pick-up opening in the pick-up direction tumbles into the projection of the pick-up opening in the pick-up direction, and
- picking-up the tumbled crop with the pick-up section.

The crop heap can have an angle of repose (δ), and the use comprises the further step of setting the inclination angle of the pick-up member (50) to be within 10° of the angle of repose, in particular to be identical to the angle of repose.

The invention will be explained in the following description referring to the annexed figures. All of the disclosed features alone or in any possible combination are part of the invention.
The figures show:
- figure 1 a perspective view of the pick-up apparatus according to the invention,
- figure 2 a front view of the pick-up apparatus of figure 1,
- figure 3 a side view of the pick-up apparatus of figure 1,
- figure 4 a top plan view of the pick-up apparatus of figure 1,
- figure 5 the detail V of figure 4 at a larger scale, and
- figure 6 a detailed view of the dividing roll of the pick-up apparatus of figures 1 to 5.

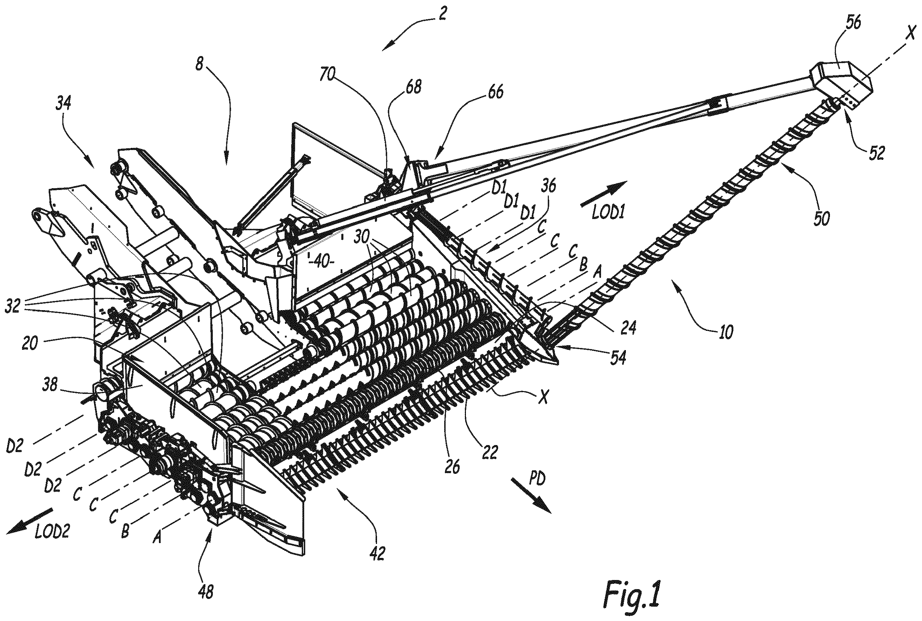

Figures 1 to 5 show a pick-up apparatus which is for example part of a not represented pick-up, cleaning and transfer machine for harvested crops, in particular root crops and preferably sugar beets.

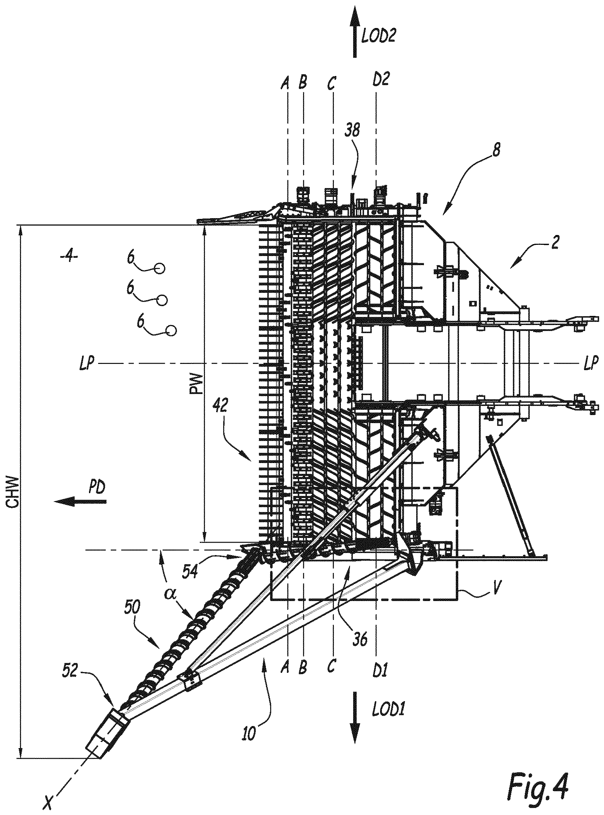

The pick-up apparatus is designated 2. The pick-up apparatus is designed for picking up harvested crops which are arranged in a crop heap 4 (see figure 4). The crop heap has a crop heap width CHW. The crop heap 4 is made from sugar beets 6. The crop heap 4 has an angle of repose δ. The angle of repose δ is generally comprised between 35° and 55° with respect to the pick-up plane PL (see below).

The pick-up apparatus 2 comprises a pick-up section 8 and a heap divider 10 adapted for dividing the crop heap 4. The pick-up section 8 defines a pick-up direction PD which is generally the direction of displacement of the pick-up apparatus during picking-up. The pick-up section 8 defines also a pick-up plane PL which is, during picking-up, a plane parallel to the ground on which the crop heap is placed. The pick-up apparatus 2 comprises also a longitudinal plane LP extending from the front to the rear of the apparatus 2 and generally vertically during picking-up and perpendicular to the pick-up plane PL.

The pick-up section 8 has a pick-up frame 20. The pick-up section 8 comprises a rake 22, a pick-up roller 24, a cleaning roller 26, distribution rollers 28, first transfer rollers 30 and second transfer rollers 32. The pick-up roller 24 could also be another pick-up member adapted for picking up crops. The pick-up roller 24 defines a pick-up width PW for the harvested crop which is generally the axial length of the pick-up roller 24.

The pick-up section 8 comprises also a transfer conveyor 34 adapted to receive the crop from the first and second transfer rollers 30, 32 and to transfer the crop, for example to a truck.

The pick-up frame 20 has a first lateral side 36, a second lateral side 38 and a central portion 40. The pick-up frame 20 forms a pick-up opening 42 which enters into contact with the crop on the crop heap during picking up. The pick-up opening 42 extends between the first and second lateral sides 36, 38. The first and second lateral sides 36, 38 extend parallel one to another. The longitudinal plane LP extends parallel to the lateral sides 36, 38 and between these lateral sides 36, 38. The pick-up section 8 defines a first lateral outward direction LOD1, which is directed perpendicularly to the longitudinal plane LP and directed from the longitudinal plane LP to the first lateral side 36. The pick-up section 8 defines a second lateral outward direction LOD2, which is directed perpendicularly to the longitudinal plane LP and directed from the longitudinal plane LP to the second lateral side 38.

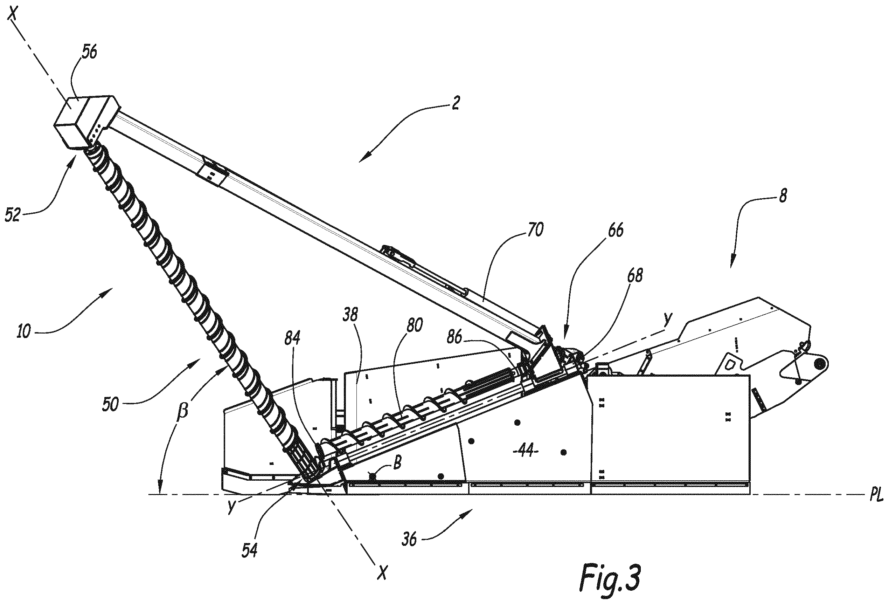

The first lateral side 36 has a first lateral external face 44 (see figure 3). The first lateral external face 44 is the most outward face of the lateral side 36 taken in the first lateral outward direction LOD1. The external face 44 limits the pick-up section 8 and comprises panels.

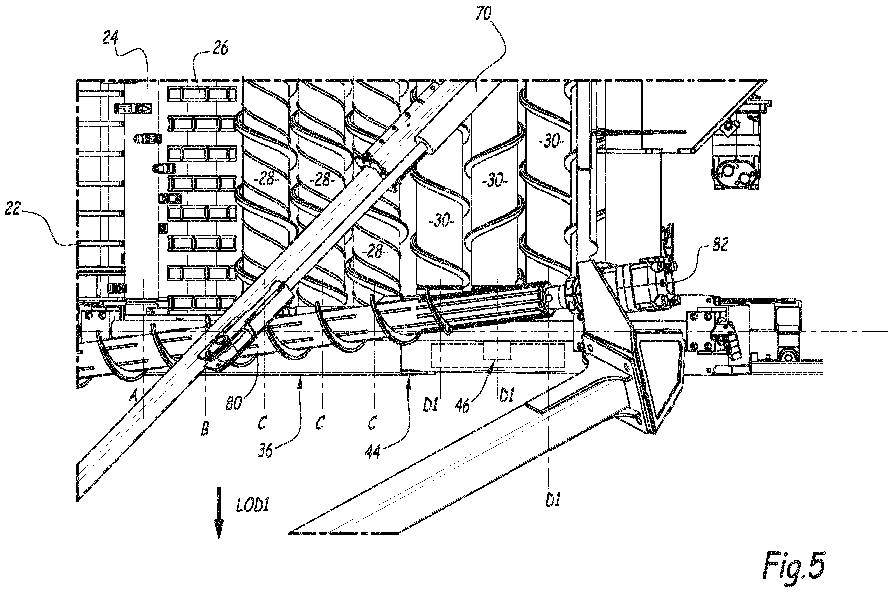

The pick-up section 8 comprises first transfer roller driving means 46 (see figure 5), for example a hydraulic motor and a gear train, adapted to drive the first transfer rollers 30. The first transfer roller driving means 46 are arranged, with respect to the first lateral external face 44, completely on the same side as the first transfer rollers 30. In other terms, the first transfer roller driving means 46 do not "stick- out" of the external face 44 in the direction LOD1.

The pick-up section 8 comprises second transfer roller driving means 48 adapted for driving the second transfer rollers 32. The second transfer roller driving means 48 can also be adapted for driving each of the cleaning rollers 26 and each of the distribution rollers 28 and the pick-up roller 24. The second transfer roller driving means 48 are arranged on the second lateral side 38 of the frame 20. The second transfer roller driving means 48 are arranged on the second lateral side 38 opposite the second transfer rollers 32. No driving means for driving the pick-up roller 24, the cleaning roller 26, the distribution rollers 28, and/or the second transfer rollers 32 are arranged on the first lateral side 36.

The rollers 24, 26, 28, 30 and 32 are each rotatably mounted to the frame 20 around respective rotation axis A-A (roller 24), B-B (roller 26), C-C (roller 28), D1-D1 (roller 30), D2-D2 (roller 32). The axis A-A of the pick-up roller 24, B-B of the cleaning roller 26, and C-C of the distribution roller 28 are perpendicular to the longitudinal plane LP and parallel to the pick-up plane PL. The first transfer rollers 30 and the second transfer rollers 32 are arranged on opposite sides of the longitudinal plane LP and of the transfer conveyor 34.

The heap divider 10 is adapted for dividing the crop heap 4 during picking-up of the crop by the pick-up section.

The heap divider 10 comprises a dividing roller 50 adapted for guiding harvested crops on the crop heap 4 toward the pick-up opening 42. Alternatively, the dividing roller 50 can be another dividing member.

The dividing roller 50 has an active position with respect to the pick-up section 8 and an inactive position with respect to this pick-up section 8. The active position is taken during picking-up crops 6 whereas the inactive position is taken during transport of the pick-up apparatus.

The dividing roller 50 has an upper end 52, a lower end 54 and a longitudinal axis X-X. The upper end 52 is farther away from the pick-up plane than the lower end 54.

In the following, the active position is explained further in detail. The upper end 52 is located with respect to the lower end 54 forward considered in the pick-up direction PD (see figure 4). The upper end 52 is farther away from the pick-up roller 24 than the lower end 54 taken in the pick-up direction PD. The upper end 52 is also located with respect to the lower end 54 laterally outwards with respect to the first lateral side 36 in the first lateral direction LOD1. Also the upper end 52 is located laterally outwards of the first lateral side 36 taken in the first lateral outward direction LOD1, i.e. farther away from the longitudinal plane LP than the first lateral side 36. The lower end 54 is located nearer to the first lateral side 36 than the upper end 52 and is preferably aligned with the first lateral side 36 taken in the first lateral direction LOD1.

The pick-up section 8 defines also a pick-up volume PV, which is the volume delimited by two planes P1 and P2 perpendicular to the axis A-A of the pick-up roller 24 and located at each end of the roller 24. The planes P1 and P2 coincide with the ends defining the pick-up width PW.

In the active position, the upper end 52 is located outside the pick-up volume PV.

The dividing roller 50 is rotatably mounted with respect to the pick-up section 8 around the longitudinal axis X-X.

The heap divider 10 comprises dividing roller driving means 56, for example an hydraulic motor and a reduction gear.

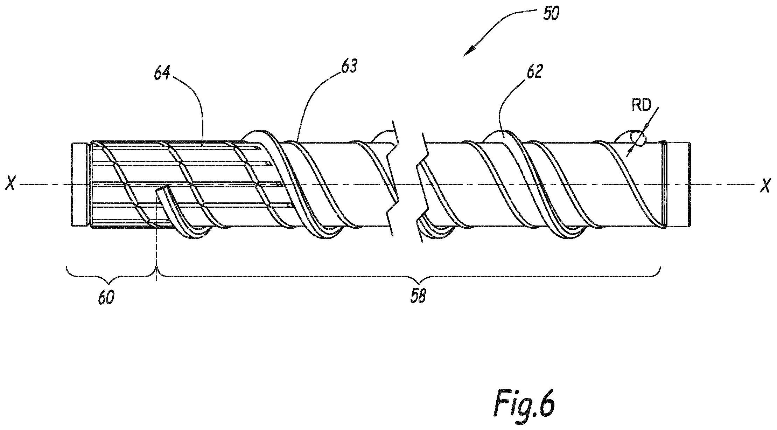

Referring to figure 6, the dividing roller 50 has an axial heap dividing portion 58 and an axial intake portion 60. The heap dividing portion 58 and intake portion 60 are axially distinct. The overall axial length of the dividing roller 50 is comprised between 1500mm and 4000mm.

The heap dividing portion 58 comprises a heap dividing protrusion 62, in the instant embodiment one single heap dividing protrusion. The heap dividing protrusion 62 is a thread protrusion, the thread having a diameter RD of between 10mm and 40mm, preferably between 15mm and 25 mm. The lead of the thread protrusion is comprised between 150mm and 400mm, and preferably between 200mm and 240mm. Alternatively, the heap dividing protrusion 62 is another protrusion than a helical thread protrusion.

The heap dividing portion 58 comprises wear protection members 63. The wear protection members 63 have a radial dimension smaller than the radial dimension of the heap dividing protrusion 62. The wear protection members 63 are helical threads, for example raised welding beads.

The intake portion 60 has no heap dividing protrusion 62. The intake portion 60 has also the wear protection members 63, which extend over the whole axial length of the intake portion.

Supplementary wear protection members 64 are arranged on the intake portion, and preferably also on part of the heap dividing portion 58. The supplementary wear protection members 64 extend parallel to the longitudinal axis X-X. The supplementary wear protection members 64 have a radial height that is smaller than the radial height of the heap dividing protrusion 62. The intake portion 60 extends for example over an axial length of 10cm to 50 cm.

The longitudinal axis X-X is inclined with respect to the pick-up direction PD and projected onto the pick-up plane PL at a first angle of inclination α, which is comprised between 30° and 60°. In other words, the projection of the longitudinal axis X-X onto the pick-up plane PL extends at the first angle of inclination α to the pick-up direction PD (see figure 4). The longitudinal axis X-X is inclined with respect to the pick-up plane PL and perpendicular to the pick-up direction PD at a second angle of inclination β comprised between 30 and 60° (see figure 3). In other words, the projection of the longitudinal axis X-X onto the longitudinal plane LP is inclined with respect to the pick-up plane PL at the second angle of inclination β. These first angle of inclination α and second angle of inclination β are taken during the active position of the dividing member 50.

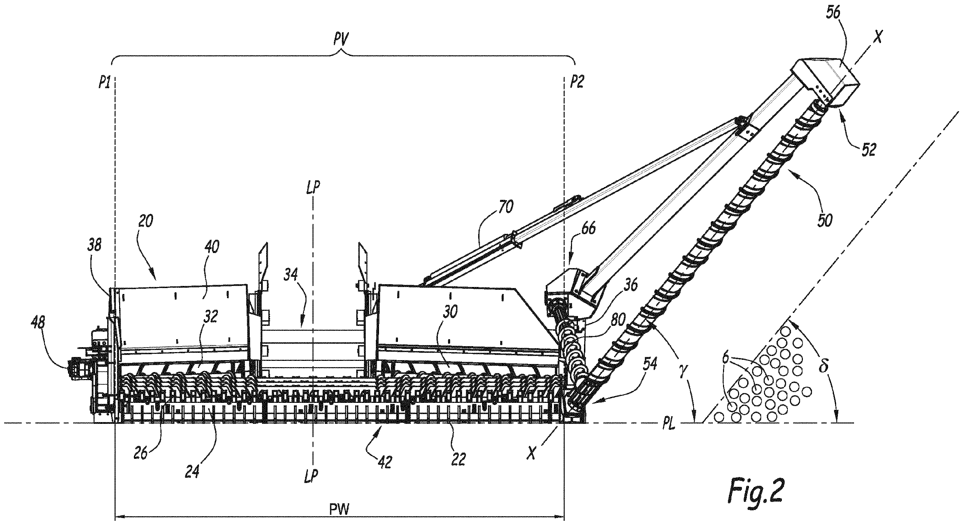

The longitudinal axis X-X is inclined with respect to the pick-up plane PL and projected onto a plane perpendicular to the pick-up direction PD at a third angle of inclination γ, which is comprised between 25° and 65° (see figure 2), preferably between 35° and 55°.

In other terms, the inclination of the dividing member 50, respectively its longitudinal axis X-X, in the active position corresponds essentially to the angle of repose δ of the crop heap 4.

Advantageously the inclination angle of the pick-up member 50 is set to be within 10° degrees of the angle of repose δ and in particular to be identical to this angle of repose. The first angle of inclination α and second angle of inclination β are chosen depending on the third angle of inclination γ to be obtained.

The heap divider 10 comprises link means 66 linking the dividing roller 50 to the pick-up frame 20 and the link means 66 are adapted to modify the position of the dividing roller 50 with respect to the pick-up frame 20 in the active position. The link means 66 comprise for example a hinge 68 and a hydraulic cylinder 70 adapted to move the dividing roller 50 around the hinge 68. The hinge 68 defines an axis of rotation of the dividing roller 50 around a hinge axis Y-Y extending perpendicular to the longitudinal axis X-X. The hinge axis Y-Y crosses the longitudinal axis X-X at the lower end 54.

The link means 66 are also adapted to move the heap divider 10 from the active position to the inactive position and vice-versa.

In the inactive position, the upper end 52 is located with respect to the lower end 54 laterally inwards with respect to the first lateral side 36. In other words, in the inactive position, the upper end 52 is located in between the first lateral side 36 and the second lateral side 38 taken along the lateral outwards direction LOD1 perpendicular to the pick-up plane PL.

The pick-up apparatus 2 comprises furthermore a loading screw 80 adapted for loading the crops into the pick-up opening 42. The loading screw 80 is arranged along the first lateral side 36 of the pick-up frame 20. The loading screw 80 is rotationally driven by a motor 82 (see figure 5). The loading screw 80 is inclined with respect to the pick-up plane PL and has a front end 84 and a rear end 86. The front end 84 is nearer to the pick-up plane PL than the rear end 86. In other words the loading screw 80 is inclined downwardly to the front.

The structure of the loading screw is similar to the structure of the heap dividing roller 50 and will be explained hereafter.

Referring to figure 6, loading screw 80 has an axial loading portion and an axial intake portion. The loading portion and intake portion are axially distinct. The overall axial length of the loading screw 80 is comprised between 500mm and 1000mm.

The axial loading portion comprises a loading protrusion, in the instant embodiment one single loading protrusion. The loading protrusion is a thread protrusion, the thread having a diameter of between 10mm and 40mm, preferably between 15mm and 25 mm. The lead of the thread protrusion is comprised between 150mm and 400mm, and preferably between 200mm and 240mm. Alternatively, the loading protrusion 62 is another protrusion than a helical thread protrusion.

The loading portion comprises wear protection members. The wear protection members have a radial dimension smaller than the radial dimension of the loading protrusion. The wear protection members are helical threads, for example raised welding beads.

The intake portion has no loading protrusion. The intake portion has also the wear protection members, which extend over the whole axial length of the intake portion.

Supplementary wear protection members are arranged on the intake portion, and preferably also on part of the loading portion. The supplementary wear protection members extend parallel to the longitudinal axis Y-Y. The supplementary wear protection members have a radial height that is smaller than the radial height of the loading protrusion. The intake portion extends for example over an axial length of 10cm to 50 cm.

The pick-up apparatus is used as follows.

The crop heap 4 has a crop heap width CHW which is larger than the pick-up width PW. The dividing member 50 is brought into contact with the crop heap so that crop arranged outside the projection of the pick-up opening 42 in the pick-up direction tumbles into the projection of the pick-up opening 42 in the pick-up direction. In other words the crop arranged laterally of the pick-up section 8 is nudged by the dividing member 50 so that it rolls down the crop heap 4 and falls in front of the pick-up opening 42. Then the tumbled crop is picked-up with the pick-up section 8.

Thanks to the heap divider, the pick-up apparatus nudges the crop on the heap so that it falls in front of the pick-up opening without damages and the remainder of the crop heap is not damaged.

The wear protections increase the service cycles of the pick-up apparatus.

The loading screw increases the amount of crops to be loaded without damage.

The specific arrangement of the drives permits dividing the crop heap without damage and in an energy efficient manner.

The individual features of the pick-up apparatus also contribute to an economic manufacturing.

## Claims

1. Pick-up apparatus (2) for harvested crops (6) arranged in a crop heap (4), in particular root crops, and preferably sugar beets,
the pick-up apparatus (2) comprising a pick-up section (8) defining a pick-up direction PP, a pick-up plane PL, and a first lateral outward direction LOD1,
the pick-up section having a pick-up member (24) and a pick-up frame (20),
the pick-up frame (20) having a first lateral side (36), a second lateral side (38) and forming a pick-up opening (42),
the pick-up member (24) defining a pick-up width PW for the harvested crops,
the pick-up apparatus comprising a heap divider (10) adapted for dividing the crop heap,
the heap divider comprising a dividing member (50) adapted for guiding harvested crop on the crop heap (4) towards the pick-up opening,
**characterized in that**
- the dividing member (50) has an upper end (52), a lower end (54) and a longitudinal axis X-X, and **in that**
- in an active position of the dividing member, the dividing member (50) is inclined with respect to the pick-up plane PL, the upper end (52) is located with respect to the lower end (54) forward taken in the pick-up direction PD and the upper end (52) is located laterally outwards of the first lateral side (36) taken in the first lateral outward direction LOD1.

2. Pick-up apparatus according to claim 1, wherein the dividing member is a dividing roller (50) rotatably mounted with respect to the pick-up section (8) around an axis of rotation.

3. Pick-up apparatus according to claim 2, wherein the dividing roller has a threaded heap dividing portion (58) comprising at least one heap dividing protrusion (62), and preferably wherein the dividing roller has an intake portion (60) having wear protection members (63) extending parallel to the axis of rotation.

4. Pick-up apparatus according to any one of claims 1 to 3, wherein the longitudinal axis X-X is inclined with respect to the pick-up plane PL and with respect to the pick-up direction PD at a first angle of inclination (α) comprised between 30° and 60° and/or the longitudinal axis X-X is inclined with respect to the pick-up plane PL and perpendicular to the pick-up direction PD at a second angle of inclination (β) comprised between 30° and 60°.

5. Pick-up apparatus according to any one of claims 1 to 4, wherein the longitudinal axis X-X is inclined with respect to the pick-up plane PL, notably projected onto a plane perpendicular to the pick-up direction PD, a third angle of inclination (γ), which is comprised between 25° and 65°, preferably between 35° and 55°.

6. Pick-up apparatus according to any one of claims 1 to 5, wherein the heap divider comprises link means (66) linking the dividing member to the pick-up frame and wherein the link means (66) are adapted to modify the position of the dividing member with respect to the pick-up frame.

7. Pick-up apparatus according to any one of claims 1 to 6, wherein the dividing member (50) has an inactive position in which the upper end (52) is located with respect to the lower end (54) laterally inwards with respect to the first lateral side, in particular the link means being adapted to move the dividing member between the active and inactive position.

8. Pick-up apparatus according to any one of claims 1 to 7, wherein the pick-up apparatus comprises a loading screw (80) adapted for loading crops into the pick-up opening (42), and wherein the loading screw is arranged along the first lateral side (36) of the pick-up frame.

9. Pick-up apparatus according to claim 8, wherein the loading screw is inclined with respect to the pick-up plane PL and has a front end (84) and a rear end (86), taken in the pick-up direction PD, the front end being nearer to the pick-up plane PL than the rear end.

10. Pick-up apparatus according to any one of claims 1 to 9, wherein
- the first lateral side (36) comprises a first lateral external face (44),
- the pick-up section comprises first transfer rollers (30) arranged on the first lateral side of the pick-up frame and first transfer roller driving means (46), and
- the first transfer roller driving means (46) are arranged, with respect to the first lateral external face, completely on the same side as the first transfer rollers.

11. Pick-up apparatus according to any one of claims 1 to 10, wherein
the pick-up section comprises
- second transfer rollers (32) arranged on the second lateral side and/or
- a cleaning roller (26) adapted to clean the pick-up member (24),
- at least one distribution roller (28),
- second transfer roller driving means (48) adapted for driving the second transfer rollers and/or the cleaning roller and/or the at least one distribution roller, wherein
the second transfer roller driving means (48) are arranged on the second lateral side (38).

12. Use of a pick-up apparatus according to any one of claims 1 to 11 for picking-up crop from a crop heap having a heap width HW, comprising the following successive steps:
- bringing the dividing member into contact with the crop heap (4) so that crop arranged outside the projection of the pick-up opening in the pick-up direction tumbles into the projection of the pick-up opening in the pick-up direction,
- picking-up the tumbled crop with the pick-up section.

13. Use according to claim 12, wherein the crop heap has an angle of repose (δ), and wherein the use comprises the further step of setting the inclination angle of the pick-up member (50) to be within 10° of the angle of repose, in particular to be identical to the angle of repose.

## Patentansprüche

1. Aufnahmevorrichtung (2) für Erntegut (6), angeordnet in einem Haufen von Feldfrüchten (4), insbesondere Wurzelfrüchten und bevorzugterweise Zuckerrüben,
wobei die Aufnahmevorrichtung (2) einen Aufnahmeabschnitt (8) umfasst, der eine Aufnahmerichtung PD, eine Aufnahmeebene PL und eine erste laterale Richtung nach außen LOD1 definiert,
wobei der Aufnahmeabschnitt ein Aufnahmeelement (24) und einen Aufnahmerahmen (20) aufweist,
wobei der Aufnahmerahmen (20) eine erste laterale Seite (36), eine zweite laterale Seite (38) aufweist und eine Aufnahmeöffnung (42) bildet,
wobei das Aufnahmeelement (24) eine Aufnahmebreite PW für Erntegut definiert,
wobei die Aufnahmevorrichtung einen Haufenteiler (10) umfasst, der ausgelegt ist, um den Haufen von Feldfrüchten zu teilen,
wobei der Haufenteiler ein Teilungselement (50) umfasst, das ausgelegt ist, um Erntegut auf den Haufen von Feldfrüchten (4) hin zur Aufnahmeöffnung zu führen,
**dadurch gekennzeichnet, dass**:
- das Teilungselement (50) ein oberes Ende (52), ein unteres Ende (54) und eine Längsachse X - X aufweist, und dadurch, dass
- in einer aktiven Position des Teilungselements das Teilungselement (50) mit Bezug auf die Aufnahmeebene PL geneigt ist, sich das obere Ende (52) mit Bezug auf das untere Ende (54) gesehen in der Aufnahmerichtung PD nach vorne befindet, und sich das obere Ende (52) gesehen in der ersten lateralen Richtung nach außen LOD1 lateral nach außen von der ersten lateralen Seite (36), befindet.

2. Aufnahmevorrichtung nach Anspruch 1, wobei das Teilungselement eine Teilungsrolle (50) ist, die drehbar mit Bezug auf den Aufnahmeabschnitt (8) um eine Drehachse montiert ist.

3. Aufnahmevorrichtung nach Anspruch 2, wobei die Teilungsrolle einen gewindegeschnittenen Haufenteilungsabschnitt (58) aufweist, umfassend mindestens einen Haufenteilungsvorsprung (62), und vorzugsweise wobei die Teilungsrolle einen Einlassabschnitt (60) mit Abnutzungsschutzelementen (63) aufweist, der sich parallel zur Drehachse erstreckt.

4. Aufnahmevorrichtung nach einem der Ansprüche 1 bis 3, wobei die Längsachse X
- X mit Bezug auf die Aufnahmeebene PL und mit Bezug auf die Aufnahmerichtung PD um einen ersten Neigungswinkel (α) geneigt ist, der im Bereich zwischen 30º und 60º liegt, und/oder die Längsachse X - X mit Bezug auf die Aufnahmeebene PL und senkrecht zur Aufnahmerichtung PD um einem zweiten Neigungswinkel (β) geneigt ist, der im Bereich zwischen 30º und 60º liegt.

5. Aufnahmevorrichtung nach einem der Ansprüche 1 bis 4, wobei die Längsachse X
- X mit Bezug auf die Aufnahmeebene PL, insbesondere projiziert auf eine Ebene senkrecht zur Aufnahmerichtung PD, um einem dritten Neigungswinkel (γ) geneigt ist, der im Bereich zwischen 25º und 65º liegt, vorzugsweise zwischen 35° und 55°.

6. Aufnahmevorrichtung nach einem der Ansprüche 1 bis 5, wobei der Haufenteiler Verbindungsmittel (66) umfasst, die das Teilungselement mit dem Aufnahmerahmen verbinden, und wobei die Verbindungsmittel (66) ausgelegt sind, um die Position des Teilungselements mit Bezug auf den Aufnahmerahmen zu modifizieren.

7. Aufnahmevorrichtung nach einem der Ansprüche 1 bis 6, wobei das Teilungselement (50) eine inaktive Position aufweist, in der sich das obere Ende (52) mit Bezug auf das untere Ende (54) seitlich nach innen mit Bezug auf die erste laterale Seite befindet, wobei insbesondere die Verbindungsmittel ausgelegt sind, um das Teilungselement zwischen der aktiven und der inaktiven Position zu bewegen.

8. Aufnahmevorrichtung nach einem der Ansprüche 1 bis 7, wobei die Aufnahmevorrichtung eine Ladeschraube (80) umfasst, die ausgelegt ist, um Feldfrüchte in die Aufnahmeöffnung (42) zu laden, und wobei die Ladeschraube entlang der ersten lateralen Seite (36) des Aufnahmerahmens angeordnet ist.

9. Aufnahmevorrichtung nach Anspruch 8, wobei die Ladeschraube mit Bezug auf die Aufnahmeebene PL geneigt ist und ein vorderes Ende (84) und ein hinteres Ende (86), gesehen in der Aufnahmerichtung PD, aufweist, wobei das vordere Ende näher an der Aufnahmeebene PL als das hintere Ende ist.

10. Aufnahmevorrichtung nach einem der Ansprüche 1 bis 9, wobei
- die erste laterale Seite (36) eine erste laterale äußere Fläche (44) umfasst,
- der Aufnahmeabschnitt erste Übertragungsrollen (30), die auf der ersten lateralen Seite des Aufnahmerahmens angeordnet sind, und erste Übertragungsrollen-Antriebsmittel (46) umfasst, und
- die ersten Übertragungsrollen-Antriebsmittel (46) mit Bezug auf die erste laterale äußere Fläche vollständig auf der gleichen Seite wie die ersten Übertragungsrollen angeordnet sind.

11. Aufnahmevorrichtung nach einem der Ansprüche 1 bis 10, wobei der Aufnahmeabschnitt Folgendes umfasst:
- zweite Übertragungsrollen (32), die auf der zweiten lateralen Seite angeordnet sind, und/oder
- eine Reinigungsrolle (26), die ausgelegt ist, um das Aufnahmeelement (24) zu reinigen,
- mindestens eine Verteilungsrolle (28),
- zweite Übertragungsrollen-Antriebsmittel (48), die ausgelegt sind, um die zweiten Übertragungsrollen und/oder die Reinigungsrolle und/oder mindestens eine Verteilungsrolle anzutreiben, wobei
die zweiten Übertragungsrollen-Antriebsmittel (48) auf der zweiten lateralen Seite (38) angeordnet ist.

12. Verwendung einer Aufnahmevorrichtung nach einem der Ansprüche 1 bis 11 zur Aufnahme von Feldfrüchten von einem Haufen von Feldfrüchten mit einer Haufenbreite HW, umfassend die folgenden sukzessiven Schritte:
- In-Kontakt-Bringen des Teilungselements mit dem Haufen von Feldfrüchten (4), so dass Feldfrüchte, die außerhalb des Vorsprungs der Aufnahmeöffnung in der Aufnahmerichtung angeordnet sind, in den Vorsprung der Aufnahmeöffnung in der Aufnahmerichtung fallen,
- Aufnehmen der gefallenen Feldfrüchte mit dem Aufnahmeabschnitt.

13. Verwendung nach Anspruch 12, wobei der Haufen von Feldfrüchten einen Schüttwinkel (δ) aufweist, und wobei die Verwendung den weiteren Schritt des Einstellens des Neigungswinkels des Aufnahmeelements (50) umfasst, um sich innerhalb von 10° des Schüttwinkels zu befinden, insbesondere, um identisch mit dem Schüttwinkel zu sein.

## Revendications

1. Appareil de ramassage (2) pour cultures récoltées (6) agencées en un tas de cultures (4), en particulier des cultures racines, et de préférence des betteraves à sucre,
l'appareil de ramassage (2) comprenant une section de ramassage (8) définissant une direction de ramassage PD, un plan de ramassage PL et une première direction latérale vers l'extérieur LOD1,
la section de ramassage ayant un élément de ramassage (24) et un bâti de ramassage (20),
le bâti de ramassage (20) ayant un premier côté latéral (36), un second côté latéral (38) et formant une ouverture de ramassage (42),
l'élément de ramassage (24) définissant une largeur de ramassage PW pour les cultures récoltées,
l'appareil de ramassage comprenant un dispositif de division de tas (10) adapté pour diviser le tas de cultures,
le dispositif de division de tas comprenant un élément de division (50) adapté pour guider les cultures récoltées sur le tas de cultures (4) vers l'ouverture de ramassage,
**caractérisé en ce que** :
l'élément de division (50) a une extrémité supérieure (52), une extrémité inférieure (54) et un axe longitudinal X-X, et **en ce que** :
dans une position active de l'élément de division, l'élément de division (50) est incliné par rapport au plan de ramassage PL, l'extrémité supérieure (52) est positionnée par rapport à l'extrémité inférieure (54) prise vers l'avant dans la direction de ramassage PD et l'extrémité supérieure (52) est positionnée latéralement vers l'extérieur du premier côté latéral (36) prise dans la première direction latérale vers l'extérieur LOD1.

2. Appareil de ramassage selon la revendication 1, dans lequel l'élément de division est un rouleau de division (50) monté, en rotation par rapport à la section de ramassage (8) autour d'un axe de rotation.

3. Appareil de ramassage selon la revendication 2, dans lequel le rouleau de division a une partie de division de tas filetée (58) comprenant au moins une saillie de division de tas (62), et de préférence dans lequel le rouleau de division a une partie d'admission (60) ayant des éléments de protection contre l'usure (63) s'étendant parallèlement à l'axe de rotation.

4. Appareil de ramassage selon l'une quelconque des revendications 1 à 3, dans lequel l'axe longitudinal X-X est incliné par rapport au plan de ramassage PL et par rapport à la direction de ramassage PD à un premier angle d'inclinaison (α) compris entre 30° et 60° et/ou l'axe longitudinal X-X est incliné par rapport au plan de ramassage PL et perpendiculaire à la direction de ramassage PD à un deuxième angle d'inclinaison (β) compris entre 30° et 60°.

5. Appareil de ramassage selon l'une quelconque des revendications 1 à 4, dans lequel l'axe longitudinal X-X est incliné par rapport au plan de ramassage PL, en particulier en saillie sur un plan perpendiculaire à la direction de ramassage PD, à un troisième angle d'inclinaison (γ) qui est compris entre 25° et 65°, de préférence entre 35° et 55°.

6. Appareil de ramassage selon l'une quelconque des revendications 1 à 5, dans lequel le dispositif de division de tas comprend des moyens de liaison (66) reliant l'élément de division au bâti de ramassage et dans lequel les moyens de liaison (66) sont adaptés pour modifier la position de l'élément de division par rapport au bâti de ramassage.

7. Appareil de ramassage selon l'une quelconque des revendications 1 à 6, dans lequel l'élément de division (50) a une position inactive dans laquelle l'extrémité supérieure (52) est positionnée par rapport à l'extrémité inférieure (54) latéralement vers l'intérieur par rapport au premier côté latéral, en particulier les moyens de liaison étant adaptés pour déplacer l'élément de division entre les positions active et inactive.

8. Appareil de ramassage selon l'une quelconque des revendications 1 à 7, dans lequel l'appareil de ramassage comprend une vis de chargement (80) adaptée pour charger les cultures dans l'ouverture de ramassage (42), et dans lequel la vis de chargement est agencée le long du premier côté latéral (36) du bâti de ramassage.

9. Appareil de ramassage selon la revendication 8, dans lequel la vis de chargement est inclinée par rapport au plan de ramassage PL et a une extrémité avant (84) et une extrémité arrière (86), prise dans la direction de ramassage PD, l'extrémité avant étant plus près du plan de ramassage PL que l'extrémité arrière.

10. Appareil de ramassage selon l'une quelconque des revendications 1 à 9, dans lequel :
le premier côté latéral (36) comprend une première face externe latérale (44),
la section de ramassage comprend des premiers rouleaux de transfert (30) agencés sur le premier côté latéral du bâti de ramassage et des premiers moyens d'entraînement de rouleaux de transfert (46), et
les premiers moyens d'entraînement de rouleaux de transfert (46) sont agencés, par rapport à la première face externe latérale, complètement sur le même côté que les premiers rouleaux de transfert.

11. Appareil de ramassage selon l'une quelconque des revendications 1 à 10, dans lequel :
la section de ramassage comprend :
des seconds rouleaux de transfert (32) agencés sur le second côté latéral, et/ou un rouleau de nettoyage (26) adapté pour nettoyer l'élément de ramassage (24), au moins un rouleau de distribution (28),
des seconds moyens d'entraînement de rouleaux de transfert (48) adaptés pour entraîner les seconds rouleaux de transfert et/ou le rouleau de nettoyage et/ou le au moins un rouleau de distribution, dans lequel :
les seconds moyens d'entraînement de rouleaux de transfert (48) sont agencés sur le second côté latéral (38).

12. Utilisation d'un appareil de ramassage selon l'une quelconque des revendication 1 à 11, pour ramasser des cultures d'un tas de cultures ayant une largeur de tas HW, comprenant les étapes successives suivantes consistant à :
amener l'élément de division en contact avec le tas de cultures (4) de sorte que les cultures agencées à l'extérieur de la saillie de l'ouverture de ramassage dans la direction de ramassage tombent dans la saillie de l'ouverture de ramassage dans la direction de ramassage,
ramasser les cultures qui sont tombées avec la section de ramassage.

13. Utilisation selon la revendication 12, dans laquelle le tas de cultures a un angle de talus naturel (δ), et dans lequel l'utilisation comprend l'étape supplémentaire consistant à régler l'angle d'inclinaison de l'élément de ramassage (50) pour qu'il soit dans la plage de 10° de l'angle du talus naturel, en particulier qu'il soit identique à l'angle du talus naturel.
